# EUROPÄISCHE PATENTSCHRIFT

(11) **EP 1 178 657 B1**
(45) Veröffentlichungstag und Bekanntmachung des Hinweises auf die Patenterteilung: **26.10.2011**
(21) Anmeldenummer: 01112314.8
(22) Anmeldetag: 19.05.2001
(51) Int. Cl.: H04M 3/533

(54) **Verfahren, Endeinrichtung und zentrale Einrichtung zum Übertragen einer Kurznachricht in einem Festnetz**
Method, terminal and central server for the transmission of short messages over a fixed network
Méthode, terminal et serveur central pour la transmission de messages courts sur le réseau fixe

(30) Priorität: 04.08.2000 DE 10038069
(43) Veröffentlichungstag der Anmeldung: 06.02.2002
(73) Patentinhaber: Deutsche Telekom AG, 53113 Bonn (DE)
(72) Erfinder: Schellhaas, Werner, 64372 Ober-Ramstadt (DE); Hellenthal, Hans Georg, 51105 Köln (DE); Hapke, Wolfgang, 64342 Seeheim-Jugenheim (DE)

(56) Entgegenhaltungen:
- WO-A-00/36854
- DE-A1- 19 925 220

## Beschreibung

Die Erfindung betrifft ein Verfahren zum Übertragen einer Nachricht, insbesondere einer SMS(Short Message Service)-Nachricht, von einer an einen Standard-Telefonanschluss angeschalteten Ursprungs-Endeinrichtung zu wenigstens einer Ziel-Endeinrichtung. Die Erfindung betrifft ferner eine Endeinrichtung sowie eine zentrale Einrichtung, welche zur Übertragung einer Nachricht gemäß dem Verfahren einsetzbar sind.

Im Mobilfunkbereich, beispielsweise bei GSM (Global System for Mobile Communication) ist es möglich, kurze Textnachrichten von einem Mobilfunkteilnehmer zu einem anderen zu übermitteln. Diese sogenannten "Kurznachrichten" können mittels der Zifferntastatur mit alphanumerischer Belegung in das Handgerät eingegeben werden, wobei die einzelnen Zeichen durch ein- oder mehrmaliges Drücken von bestimmten Zifferntasten im Display erscheinen. Ein auf diese Weise eingegebener Text kann schließlich gespeichert und zu einem gerufenen Mobilfunkteilnehmer übertragen werden, dessen entsprechende Zielrufnummer zuvor eingegeben worden ist. Beim empfangenden Mobilfunkteilnehmer wird eine eingegangene Kurznachricht meist durch ein kurzes akustisches Signal angezeigt; daraufhin kann der Text beim Mobilfunkteilnehmer aktiviert und angezeigt werden. Im GSM-Bereich wird eine solche Kurznachricht über das sogenannte GSM-Protokoll von einem sendenden Mobilfunkteilnehmer über einen Server, einem sogenannten Short Message Service Centre, zu einem empfangenden Mobilfunkteilnehmer übertragen.

Für den Empfang von SMS-Nachrichten in einem analogen Festnetz wurde bei ETSI Ende 1999 ein Entwurf (EN 300 659-3) verabschiedet, der es erlaubt, mittels Datenübertragung (FSK, frequency shift keying) bis zu 253 Zeichen von einer Vermittlungseinrichtung zu einem angeschalteten Endgerät zu übertragen. Dieser Standard beschreibt allerdings nur den Empfang einer SMS-Nachricht an einem Endgerät.

Allerdings ist es in analogen und digitalen Festnetzen nach wie vor nicht möglich, eine SMS-Nachricht direkt von einem an ein Festnetz angeschalteten Endgerät abzusenden Die WO 00/36954 offenbart ein Verfahren zur Übertragung von Kurznachrichten in Telekommunikationsnetzen.

Der Erfindung liegt daher die Aufgabe zugrunde, ein Verfahren sowie eine Endeinrichtung und eine zentrale Einrichtung zur Verfügung zu stellen, die das Erzeugen und Absenden von Nachrichten, insbesondere einer Kurznachricht, innerhalb eines Festnetzes ermöglichen.

Dieses technische Problem löst die Erfindung zum einen mit den Verfahrensschritten des Anspruchs 1.

Danach werden zunächst mehrere, die zu übertragende Nachricht darstellende, alphanumerische Zeichen an einer Ursprungs-Endeinrichtung eingegeben. Anschließend wird jedes dieser eingegebenen Zeichen in entsprechende Signale, welche durch ein vorbestimmtes signalisierungsverfihren für einen Standard-Telefonanschluss definiert sind, umgesetzt. Bei dem Signalisierungsverfahren kann es sich um das aus dem analogen Festnetzbereich bekannte Mehrfrequenzwahlverfahren (MFV), auch Dual-Tone-Multifrequency (DTMF) -Verfahren genannt, handeln, mit dem sich die Ziffern 0 bis 9 und die Zeichen *,# sowie A bis D erzeugen lassen. Die in die entsprechenden Signale umgesetzten codierten Zeichen werden anschließend beispielsweise zu einer Vermittlungsstelle oder einem zentralen Server übermittelt, und dort in ein Format umgesetzt, welches von der Ziel-Endeinrichtung verarbeitet werden kann. An der Ziel-Endeinrichtung wird schließlich die Nachricht beispielsweise auf einem Display wiedergegeben. An dieser Stelle sei angemerkt, dass es sich bei der Ziel-Endeinrichtung beispielsweise um ein an einen Standard-Telefonanschluss angeschaltetes Endgerät oder um ein Mobilfunktelefon handeln kann.

Vorteilhafte Weiterbildungen sind Gegenstand der Unteransprüche.

Anstatt die eingegebenen Zeichen unmittelbar in DTMF-Signale umzusetzen, ist es möglich, die Zeichen zuerst gemäß einem Datenaufzeichnungsformat zu codieren und dann in entsprechende DTMF-Signale umzusetzen. Vorzugsweise handelt es sich bei dem Datenaufzeichnungsformat um den ASCII- oder IA5-Standard.

Um alle Zeichen aus dem ASCII- oder IA5-Zeichenvorrat mit Hilfe des DTMF-Zeichenvorrats darstellen und übertragen zu können, müssen die binärcodierten ASCII- oder IA5-Zeichen in einen entsprechenden, ein- bis dreistelligen Dezimalcode konvertiert und vorzugsweise durch bis zu drei zeitlich aufeinanderfolgende DTMF-Zeichen ersetzt werden. Somit kann jedes ASCII- oder IA5-Zeichen mittels eines DTMF-Signals, welches einer ein- bis dreistelligen DTMF-Zeichenfolge entspricht, generiert, übertragen und im Ziel wieder entsprechend reproduziert werden.

Um eine möglichst hohe Übertragungsrate zu erreichen, ist es notwendig, die jeweils mehrere DTMF-Zeichen umfassenden DTMF-Signale vor dem Übermitteln gemäß einer vorbestimmbaren Komprimierungsvorschrift derart zu codieren, dass die Anzahl der die zu übertragende Nachricht darstellenden DTMF-Zeichen reduziert wird. Neben den komprimierten DTMF-Signalen kann auch eine, der ausgewählten Komprimierungsvorschrift entsprechende Kennung übermittelt werden, um eine richtige Dekomprimierung auf der Empfangsseite zu gewährleisten.

Um der Vermittlungsstelle oder dem zentralen Server anzuzeigen, dass nunmehr eine Nachricht, insbesondere eine SMS-Nachricht übertragen wird, kann eine entsprechende Dienstekennung mit übertragen werden. Darüber hinaus können neben der Adresse der Ursprungs- und/oder Ziel-Endeinrichtung auch die Adresse des zentralen Servers, falls ein solcher verwendet wird, übermittelt werden.

Zur Protokollierung oder erneuten Übermittlung der Nachricht können sowohl die zu übertragende Nachricht, die Dienstekennung, die die Komprimierungsvorschrift anzeigende Kennung, eine Quittungsanforderung und/oder die Adresse der Ursprungs- und/oder Ziel-Endeinrichtung in der Ursprungs-Endeinrichtung zwischengespeichert werden.

Um die Bedienerfreundlichkeit zu erhöhen, wird die Verbindung vor der Übermittlung der eigentlichen Nachricht zur Vermittlungseinrichtung oder zum Server automatisch aufgebaut. Darüber hinaus kann die aufgebaute Verbindung nach dem Übermitteln aller Daten automatisch wieder ausgelöst werden.

Das technische Problem wird ebenfalls durch die Merkmale des Anspruchs 8 gelöst.

Danach ist eine Endeinrichtung vorgesehen, die zur Übertragung einer Nachricht gemäß dem oben beschriebenen Verfahren einsetzbar ist. Die Endeinrichtung weist eine analoge oder digitale Schnittstelle zum Anschalten an einen Standard-Telefonanschluss, auch Festnetzanschluss genannt, auf. Um eine Nachricht erzeugen zu können, weist die Endeinrichtung eine Tastatur zur Eingabe alphanumerischer Zeichen auf. Ferner dient eine Codiereinrichtung dazu, die über die Tastatur eingebbaren Zeichen gemäß einem vorbestimmten Datenaufzeichnungsformat zu codieren. Eine Umsetzeinrichtung sorgt für die Umsetzung eingegebener codierter Zeichen in Signale, welche durch ein vorbestimmtes Signalisierungsverfahren für einen Standard-Telefonanschluss erzeugbar sind.

Um eine möglichst hohe Übertragungsrate zu erzielen, ist in der Endeinrichtung eine Einrichtung zum Reduzieren der Anzahl der eine zu übertragende Nachricht darstellenden DTMF-Zeichen gemäß einer vorbestimmbaren Komprimierungsvorschrift vorgesehen.

Ferner weist die Endeinrichtung eine Einrichtung zum automatischen Aufbauen einer Verbindung vor der eigentlichen Nachrichtenübertragung und zum automatischen Auslösen der aufgebauten Verbindung auf, wenn die Nachricht übermittelt worden ist.

Die oben angegebene Aufgabe wird ebenfalls durch eine zentrale Einrichtung gemäß Anspruch 9 gelöst, welche zur Übertragung einer Nachricht gemäß dem oben beschriebenen Verfahren einsetzbar ist.

Die zentrale Einrichtung weist hierzu eine Einrichtung zum Empfangen einer Nachricht von einer an einem Standard-Telefonanschluss anschaltbaren Endeinrichtung auf, wobei die Nachricht durch Signale übermittelbar ist, welche durch ein vorbestimmtes Signalisierungsverfahren für einen Standard-Telefonanschluss erzeugt werden. Ferner ist eine Einrichtung zum Umsetzen der Signale in ein Format, welches von einer vorbestimmten Ziel-Endeinrichtung verarbeitbar ist, vorgesehen.

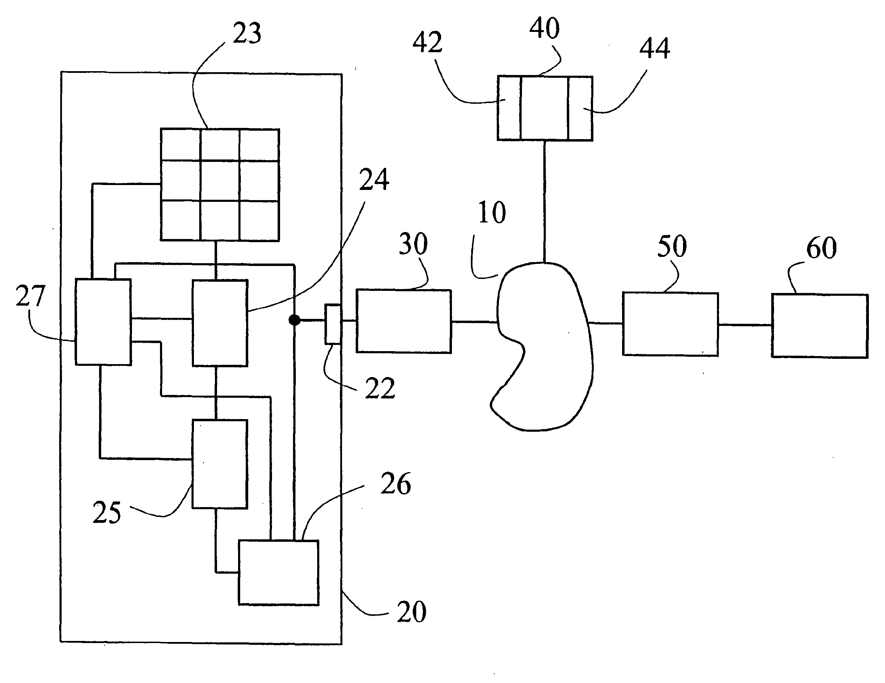

Die Erfindung wird nachstehend anhand eines Ausführungsbeispiels in Verbindung mit der beiliegenden Figur näher erläutert.

In der Figur ist ein gewöhnliches Fernsprechnetz, auch Festnetz genannt, allgemein mit 10 gekennzeichnet. An das Festnetz 10, welches im vorliegenden Beispiel ein analoges Netz darstellen soll, ist ein Endgerät 20 über eine Anschlussleitung 70 und eine Vermittlungsstelle 30 angeschaltet. Ferner ist an das Festnetz 10 ein Server 40 zum Empfang und Weiterleiten von Kurznachrichten, auch SMS-Nachrichten genannt, sowie eine weitere Vermittlungsstelle 50 angeschaltet, an die wiederum ein weiteres Endgerät 60 angeschaltet ist. Die beiden dargestellten Endgeräte 20 und 60 unterscheiden sich im Aufbau nicht, so dass eine detaillierte Beschreibung lediglich anhand des Endgeräts 20 erfolgt.

Das Endgerät 20, beispielsweise ein Telefon, weist eine analoge Schnittstelle 22 auf, über die das Telefon 20 über die Anschlussleitung 70 an einen Festnetzanschluss angeschaltet ist. Ferner weist das Telefon 20 eine Tastatur 23 zur Eingabe alphanumerischer Zeichen auf. Darüber hinaus ist eine Codiereinrichtung 24 vorgesehen, die die über die Tastatur 23 eingebbaren Zeichen beispielsweise in ASCII-Zeichen codiert. Eine Umsetzungseinrichtung 25 dient dazu, ein ASCII-Zeichen in eine entsprechende, vorzugsweise drei DTMF-Zeichen enthaltende DTMF-Zeichenfolge umzusetzen. Hierzu greift die Umsetzungseinrichtung 25 auf eine Tabelle zu, in der jedem ASCII-Zeichen drei DTMF-Zeichen zugeordnet sind. Gemäß dem verwendeten DTMF-Verfahren wird jedes DTMF-Zeichen durch zwei überlagerte Frequenzen erzeugt. Insbesondere lassen sich auf diese Weise in dem Telefon 20 die Ziffern 0 bis 9, *, # und für besondere Anwendungen die Zeichen A, B, C und D erzeugen und übertragen. Dadurch, dass jedem ASCII-Zeichen eine DTMF-Zeichenfolge mit drei DTMF-Zeichen zugeordnet ist, kann der gesamte ASCII-Zeichensatz durch DTMF-Zeichen dargestellt werden. Hierbei entspricht beispielsweise jede DTMF-Zeichenfolge dem jeweiligen Dezimalcode eines ASCII-Zeichens. In der Anlage I ist auszugsweise eine beispielhafte ASCII-DTMF-Umsetzungstabelle dargestellt, die in Spalte 5 DTMF-Zeichenfolgen enthält, die den Dezimalcodes der jeweiligen ASCII-Zeichen entsprechen. Der sogenannten ASCII-DTMF-Umsetzungseinrichtung 25 ist eine Komprimierungseinrichtung 26 zugeordnet, die die Anzahl der eine zu übertragende Nachricht darstellenden DTMF-Zeichen gemäß einer vorbestimmbaren Komprimierungsvorschrift reduziert. Die ASCII-DTMF-Umsetzungseinrichtung 25 und die Komprimierungseinrichtung 26 können auch in einem einzigen Baustein implementiert sein. Auf eine beispielhafte Auswahl von Komprimierungsverfahren wird weiter unten ausführlicher eingegangen.

Die komprimierten DTMF-Ausgangssignale der Komprimierungseinrichtung 26 gelangen über die analoge Schnittstelle 22, je nach Realisierungsvariante zur Vermittlungsstelle 30 oder über die Vermittlungsstelle 30 und das Festnetz 10 zum Server 40. Die Vermittlungsstelle 30 und der Server 40 weisen hierzu eine Empfangs- und Verarbeitungseinrichtung 42 auf, die zum Erkennen und Verarbeiten von DTMF-Zeichen ausgebildet ist. Ferner ist in der Vermittlungsstelle 30 und dem Server 40 eine Umsetzungseinrichtung 44 implementiert, die die empfangenen DTMF-Zeichen in ein Format umsetzt, welches von dem Server 40 oder dem gewünschten Ziel-Endgerät, im vorliegenden Beispiel das Endgerät 60, verarbeitet werden kann. Ist die Kurznachricht für ein Mobilfunkgerät bestimmt, werden die Informationen (DTMF-Zeichen) gemäß dem GSM-Protokoll umgesetzt. Handelt es sich beim Empfänger um das Ziel-Endgerät 60, können die Informationen (DTMF-Zeichen) im Server 40 oder in der Ziel-Vermittlungsstelle in Datensignale (FSK) umgesetzt und dem Endgerät 60 übermittelt werden.

Das Telefon 20 weist ferner eine programmierbare Steuereinrichtung 27 auf, die automatisch vor der Nachrichtenübermittlung eine Verbindung über die Vermittlungsstelle 30 zum Server 40 aufbauen kann. Hierzu ist die Adresse des Servers 40 in einem Speicher des Endgeräts 20 abgelegt. In diesem nicht dargestellten Speicher können ferner die eine SMS-Nachrichtenübertragung darstellende Dienstekennung sowie Kennungen für die zur Verfügung stehenden Komprimierungsverfahren abgelegt sein. Die programmierbare Steuereinrichtung 27 ist ferner derart ausgebildet, dass nach einer vollständigen SMS-Nachrichtenübertragung die Verbindung zwischen dem Endgerät 20 und der Vermittlungsstelle 30 oder dem Server 40 automatisch ausgelöst wird. Dank des automatischen Verbindungsaufbaus und -abbaus durch das Endgerät 20 kann der Bedienungskomfort verbessert und die Verbindungskosten für den rufenden Teilnehmer reduziert werden.

Nachfolgend wird der Ablauf einer SMS-Nachrichtenübertragung vom Telefon 20 zum Endgerät 60 näher erläutert.

Zunächst sei der Fall angenommen, dass eine zu übertragende Kurznachricht in nicht komprimierter Form vom Endgerät 20 zum Server 40 übertragen werden soll. Die zu übertragende Kurznachricht wird vom Benutzer zunächst über die Tastatur 23 eingegeben und in einem nicht dargestellten Speicher zwischengespeichert. Neben der zu übertragenden SMS-Nachricht kann vorab auch die Adresse des Ziel-Endgerätes 60 über die Tastatur eingegeben werden. Darüber hinaus kann die Adresse des Endgerätes 20 als auch die Dienstekennung für eine SMS-Nachrichtenübertragung in dem nicht dargestellten Speicher abgelegt sein. Die nachfolgende Beschreibung erfolgt anhand eines eingegebenen SMS-Textes mit dem Inhalt:
"Hallo, ich komme um 12 Uhr nach Hause! Bis bald!".

Wie bereits erwähnt, wird anschließend jedes ASCII-Zeichen der SMS-Nachricht in der Codiereinrichtung 24 und der ASCII-DTMF-Umsetzungseinrichtung 25 in die entsprechende, drei DTMF-Zeichen umfassende, DTMF-Zeichenfolge umgesetzt. Diese umgesetzte Nachricht lautet dann:
"(0-7-2)-(0-9-7)-(1-0-8)-(1-0-8)-(1-1-1)-(0-4-4)-(0-3-2)-(1-0-5) - (0-9-9) - (1-0-4) - (0-3-2)-(1-0-7) - (1-1-1) - (1-0-9)-(1-0-9) - (1-0-1) - (0-3-2) - (1-1-7) - (1-0-9) - (0-3-2) - (0-4-9)-(0-5-0)-(0-3-2)-(0-8-5)-(1-0-7)-(1-1-4)-(0-3-2)-(1-1-0)-(0-9-7)-(0-9-9)-(1-0-4)-(0-3-2)-(0-7-2)-(0-9-7)-(1-1-7)-(1-1-5) - (1-0-1) - (0-3-2)-(0-3-3)-(0-3-2) - (0-6-6)-(1-0-5)-(1-1-5)-(0-3-2)-(0-9-8)-(0-9-7)-(1-0-8)-(1-0-0)-(0-3-2)-(0-3-3)-#"

Damit die einzelnen DTMF-Zeichen im Server 40 richtig erkannt werden können, wird zwischen aufeinanderfolgenden DTMF-Zeichen eine Pause (symbolisiert durch "-") vorbestimmter Länge (z. B. 40ms) eingefügt. Insgesamt sind zur Darstellung der SMS-Nachricht einschließlich der Pausen 303 DTMF-Zeichen erforderlich. Zusätzlich können zwischen den DTMF-Zeichenfolgen jeweils ein Trennzeichen und eine zusätzliche Pause eingefügt werden.

Nachdem alle Daten eingegeben worden sind, baut die programmierbare Steuereinrichtung 27 in Abhängigkeit der Adresse des Servers 40 eine Verbindung über die Vermittlungsstelle 30 dorthin auf. Anschließend werden die Adresse des Endgerätes 60, die Adresse des Telefons 20, optional eine Dienstekennung zur Kennzeichnung einer SMS-Nachrichtenübertragung, die Komprimierungsart, die SMS-Nachricht sowie das Endezeichen "#" zum Server übertragen. An dieser Stelle sei darauf hingewiesen, das die Dienstekennung gewöhnlich nur dann benötigt wird, wenn eine SMS-Nachricht zur Vermittlungsstelle 30 übertragen und dort verarbeitet werden soll. Der Server 40 empfängt die DTMF-Zeichen in der Empfangs- und Auswerteeinrichtung 42. Nachdem alle Daten zum Server 40 übertragen worden sind, löst die programmierbare Steuereinheit 27 die Verbindung zwischen dem Endgerät 20 und dem Server 40 aus. Die im Server 40 ausgewerteten DTMF-Zeichen werden entsprechend der Komprimierungsvorschrift dekomprimiert und anschließend in der Umsetzungseinrichtung 44 beispielsweise in Zeichen gemäß dem ASCII-Code umgesetzt. Die so reproduzierte Kurznachricht, kann nun erneut in das, mit der Ziel-Endeinrichtung vereinbarten, Format konvertiert und in Abhängigkeit der Realisierungsvariante über das Festnetz 10 zur Vermittlungsstelle 50 oder über das Festnetz 10 und der Vermittlungsstelle 50 zum Endgerät übertragen werden. Anschließend leitet der Server 40 in Abhängigkeit der übermittelten Adresse des Endgerätes 60 einen Verbindungsaufbau über das Festnetz 10 zur Vermittlungsstelle 50 oder direkt über die Vermittlungsstelle 50 zum Endgerät 60 ein und übermittelt die SMS-Nachricht im entsprechenden Datenformat. Werden die Daten vom Server 40 zur Vermittlungsstelle 50 übertragen, sorgt die Vermittlungsstelle 50 für die Zustellung der Daten zum Endgerät 60 im FSK-Format. Das Endgerät 60 ist in der Lage, die im FSK-Format übermittelte SMS-Nachricht beispielsweise zu speichern und/oder auf einem Display darzustellen.

Um die Übertragungskapazität des Systems erhöhen zu können, ist es notwendig, die Anzahl der die zu übertragende SMS-Nachricht darstellenden DTMF-Zeichen in der Komprimierungseinrichtung 26 gemäß einer auswählbaren Komprimierungsvorschrift zu reduzieren. Eine erste von der Komprimierungseinrichtung 26 angewandte Komprimierungsvorschrift beseitigt zunächst die Zwischenpausen zwischen den DTMF-Zeichen der ursprünglichen, oben dargestellten SMS-Nachricht. Allerdings muss in diesem Fall sichergestellt werden, dass keine zwei oder mehr gleiche DTMF-Zeichen hintereinander auftreten können; denn diese Zeichen könnten im Server 40 nicht mehr getrennt ausgewertet werden. Hierzu wird das DTMF- Sonderzeichen A eingeführt. Die Komprimierungseinrichtung 26 ist hierbei in der Lage, zwei aufeinanderfolgende gleiche DTMF-Zeichen innerhalb einer DTMF-Zeichenfolge zu erkennen und das zweite DTMF-Zeichen durch das DTMF- Sonderzeichen A zu ersetzen. Zusätzlich kann zwischen jeder DTMF-Zeichenfolge, welche jeweils ein ASCII-Zeichen darstellt, ein Trennzeichen "*" eingefügt werden. Unter Verwendung von zusätzlichen dreistelligen Anfangs- und Endezeichen sowie einer dreistelligen Checksumme können die empfangenen Daten im Ziel auf Korrektheit überprüft werden. Bei einer fehlerhaften Übertragung kann eine Information zum Sender übermittelt werden, die ggf. eine Wiederholung der Daten erlaubt.

Die entsprechende DTMF-Zeichenfolge obiger SMS-Nachricht ist nachfolgend wiedergegeben.
"*OA2*072*097*108*108*1A*04A*032*105*09A*104*032*107*1A1
*109*109*101*032*1A7*109*032*049*050*032*085*107*1A4*032* 1A0*097*09A*104*032*072*097*1A7*1A5*101*032*03A*032*06A*1 05*1A5*032*098*097*108*10A*032*03A*OA3*056#"

Die Anzahl der übertragenen DTMF-Zeichen können dadurch auf 213 Zeichen gegenüber 303 Zeichen im nicht komprimierten Fall reduziert werden.

Die Komprimierungseinrichtung 26 kann ferner eine weitere Komprimierungsvorschrift durchführen, die sich von der vorhergehenden Komprimierungsvorschrift dadurch, dass neben dem DTMF- Sonderzeichen A auch das DTMF- Sonderzeichen B eingeführt wird. In diesem Fall ist die Komprimierungseinrichtung 26 in der Lage, drei identische DTMF-Zeichen in einer DTMF-Zeichenfolge zu erkennen und die beiden letzten DTMF-Zeichen durch das DTMF- Sonderzeichen B zu ersetzen. Die entsprechend komprimierte DTMF-Zeichenfolge ist nachfolgend angegeben:
"*0A2*072*097*108*108*1B*04A*032*105*09A*104*032*107*1B* 109*109*101*032*1A7*109*032*049*050*032*085*107*1A4*032* 1A0*097*09A*104*032*072*097*1A7*1A5*101*032*03A*032*06A* 105*1A5*032*098*097*108*10A*032*03A*0A3*056#"

Auf diese Weise kann die Anzahl der zu übertragenden DTMF-Zeichen auf 211 Zeichen reduziert werden. Die Komprimierungseinrichtung 26 kann weiterhin eine Komprimierungsvorschrift auswählen, die im Unterschied zu den vorgenannten Komprimierungsvorschriften in jeder DTMF-Zeichenfolge das DTMF-Zeichen "0" eliminiert, sofern es an erster und ggf. an zweiter Stelle steht. Auf diese Weise kann die Anzahl zu übertragender DTMF-Zeichen auf 179 Zeichen reduziert werden.

Eine weitere alternative Komprimierungsvorschrift sieht vor, dass zwar alle Nullen übertragen werden, aber Trennzeichen zwischen den einzelnen DTMF-Zeichenfolgen entfernt und neben den DTMF- Sonderzeichen A und B nunmehr auch die Sonderzeichen C und D eingeführt werden. In diesem Fall sorgt die Komprimierungsvorrichtung 26 dafür, dass bei zwei gleichen aufeinanderfolgenden DTMF-Zeichen das zweite DTMF-Zeichen durch das Sonderzeichen A ersetzt wird. Bei drei aufeinanderfolgenden gleichen DTMF-Zeichen werden die letzten beiden DTMF-Zeichen durch das Sonderzeichen B ersetzt. Bei vier aufeinanderfolgenden gleichen DTMF-Zeichen werden die letzten drei DTMF-Zeichen durch das Sonderzeichen C ersetzt. Bei fünf aufeinanderfolgenden gleichen DTMF-Zeichen werden die letzten vier DTMF-Zeichen durch das Sonderzeichen D ersetzt. Darüber hinaus werden wiederum dreistellige Textanfangs- und Textendezeichen sowie ein Endezeichen übertragen. Mit Hilfe dieses Komprimierungsverfahrens kann die Anzahl der zu übertragenden DTMF-Zeichen für den eingegebenen SMS-Text auf 160 Zeichen reduziert werden. Die zum oben genannten SMS-Text gehörende DTMF-Zeichenfolge lautet dann wie folgt.
"*0A2*0720971081081B04A03210509A1040321071C1091091010321A7109 0320490500320851071A40321A009709A1040320720971A71A510103203A0 3206A1051A503209809710810A03203A0A3056#"

Eine weitere Komprimierungsvorschrift basiert auf dem IA5-Standard, der insgesamt 127 IA5-codierte Zeichen gegenüber 256 codierten ASCII-Zeichen enthält. Eine entsprechende IA5-DTMF-Umsetzungstabelle ist auszugsweise in Anlage 2 aufgelistet. Die vorletzte Spalte dieser Tabelle enthält das Ergebnis der Komprimierungsvorschrift. Diese Komprimierungsvorschrift zeichnet sich dadurch aus, dass keine Trennungszeichen zwischen den einzelnen DTMF-Zeichenfolgen, keine Null eines DTMF-Zeichens, wenn diese an der ersten und ggf. an zweiter Stelle steht, und keine Pausen zwischen den einzelnen DTMF-Zeichen übertragen werden. Darüber hinaus werden wiederum die DTMF-Sonderzeichen A bis D verwendet, wobei das Sonderzeichen A die ersten beiden DTMF-Zeichen 10, B die ersten beiden DTMF-Zeichen 11, das Sonderzeichen C die ersten beiden DTMF-Zeichen 12 einer DTMF-Zeichenfolge ersetzt. Das Sonderzeichen D wird verwendet, wenn zwei aufeinander folgende DTMF-Zeichen innerhalb einer DTMF-Zeichenfolge oder über mehrere DTMF-Zeichenfolgen hinwegidentisch sind. In diesem Fall wird das jeweils zweite DTMF-Zeichen durch das Sonderzeichen D ersetzt; denn bei der Übertragung von DTMF-Zeichen ohne Pausezeichen muss in jedem Fall verhindert werden, dass zwei identische DTMF-Zeichen hintereinander übertragen werden. Mit dieser Komprimierungsvorschrift kann die Anzahl der zu übertragenden DTMF-Zeichen für oben genanntes Beispiel auf 106 Zeichen reduziert werden.

Das erfindungsgemäße Verfahren ermöglicht ferner eine einfache Kurztexteingabe an Standard-Endgeräten, die über keinen ASCII-Zeichenvorrat verfügen. In diesem Fall wird nach der Übertragung einer eine Kurznachricht kennzeichnenden Dienstekennung zur Vermittlungsstelle 30 oder nach einer Einwahl beim SMS-Server 40 die Zielrufnummer und gegebenenfalls die Komprimierungsart eingegeben. Danach wird ähnlich der Eingabe an einem Mobilfunkgerät die alphanumerischen Zeichen durch ein- oder mehrmaliges Betätigen einer Zifferntaste eingegeben, wobei nunmehr die Betätigung einer Zifferntaste unmittelbar ein Aussenden des jeweiligen DTMF-Zeichens bewirkt. Beispielsweise verfügt der Server 40 über eine Logik, mit der dieser anhand der empfangenen Zeichenkombinationen gemäß vorbestimmter linguistischer Regeln ein sinnvolles Wort finden und dieses beispielsweise mittels Sprachausgabe dem sendenden Teilnehmer als akustische Rückmeldung zuspielen kann.

Dank der Erfindung ist es nunmehr erstmals möglich, nicht nur SMS-Nachrichten von einer an ein Festnetz angeschlossenen Endeinrichtung abzusenden, sondern auch die zur Übertragung einer SMS-Nachricht erforderliche Anzahl von DTMF-Zeichen entsprechend vorbestimmbarer Komprimierungsverfahren zu reduzieren.

**ASCII - DTMF - Umsetzungstabelle**

| BIN | DEZ | HEX | Chor$ | Lösung | |
|---|---|---|---|---|---|
| xxxx xxxxB | xxxD | xxH | | DTMF | ms |
| 0000 0000 | 0 | 00 | NUL | -0-0-0 | 240 |
| 0000 0001 | 1 | 01 | SOH | -0-0-1 | 240 |
| 0000 0010 | 2 | 02 | STX | -0-0-2 | 240 |
| 0000 0011 | 3 | 03 | ETX | -0-0-3 | 240 |
| 0000 0100 | 4 | 04 | EOT | -0-0-4 | 240 |
| 0000 0101 | 5 | 05 | ENQ | -0-0-5 | 240 |
| 00000110 | 6 | 06 | ACK | -0-0-6 | 240 |
| 0000 0111 | 7 | 07 | BEL | -0-0-7 | 240 |
| 0000 1000 | 8 | 08 | BS | -0-0-8 | 240 |
| 0000 1001 | 9 | 09 | HAT | -0-0-9 | 240 |
| 0000 1010 | 10 | 0A | LF | -0-1-0 | 240 |
| 0000 1011 | 11 | 0B | VT | -0-1-1 | 240 |
| 0000 1100 | 12 | 0C | FF | -0-1-2 | 240 |
| 0000 1101 | 13 | 0D | CR | -0-1-3 | 240 |
| 0000 1110 | 14 | 0E | SO | -0-1-4 | 240 |
| 0000 1111 | 15 | 0F | SI | -0-1-5 | 240 |
| 0001 0000 | 16 | 10 | DUL | -0-1-6 | 240 |
| 0001 0001 | 17 | 11 | DC1 | -0-1-7 | 240 |
| 0001 0010 | 18 | 12 | DC2 | -0-1-8 | 240 |
| 0001 0011 | 19 | 13 | DC3 | -0-1-9 | 240 |
| 0001 0100 | 20 | 14 | DC4 | -0-2-0 | 240 |
| 0001 0101 | 21 | 15 | NAK | -0-2-1 | 240 |
| 0001 0110 | 22 | 16 | SYN | -0-2-2 | 240 |
| 0001 0111 | 23 | 17 | ETB | -0-2-3 | 240 |
| 0001 1000 | 24 | 18 | CAN | -0-2-4 | 240 |
| 0001 1001 | 25 | 19 | EM | -0-2-5 | 240 |
| 0001 1010 | 26 | 1A | SUB | -0-2-6 | 240 |
| 0001 1011 | 27 | 1B | ESC | -0-2-7 | 240 |
| 0001 1100 | 28 | 1C | FS | -0-2-8 | 240 |
| 0001 1101 | 29 | 1D | GS | -0-2-9 | 240 |
| 0001 1110 | 30 | 1E | RS | -0-3-0 | 240 |
| 0001 1111 | 31 | 1F | US | -0-3-1 | 240 |
| 0010 0000 | 32 | 20 | SPACE | -0-3-2 | 240 |
| 0010 0001 | 33 | 21 | ! | -0-3-3 | 240 |
| 0010 0010 | 34 | 22 | " | -0-3-4 | 240 |
| 0010 0011 | 35 | 23 | # | -0-3-5 | 240 |
| 0010 0100 | 36 | 24 | S | -0-3-6 | 240 |
| 0010 0101 | 37 | 25 | % | -0-3-7 | 240 |
| 0010 0110 | 38 | 26 | & | -0-3-8 | 240 |
| 0010 0111 | 39 | 27 | ' | -0-3-9 | 240 |
| 0010 1000 | 40 | 28 | ( | -0-4-0 | 240 |
| 0010 1001 | 41 | 29 | ) | -0-4-1 | 240 |
| 0010 1010 | 42 | 2A | * | -0-4-2 | 240 |
| 0010 1011 | 43 | 2B | + | -0-4-3 | 240 |
| 0010 1100 | 44 | 2C | , | -0-4-4 | 240 |
| 0010 1101 | 45 | 2D | - | -0-4-5 | 240 |
| 0010 1110 | 46 | 2E | . | -0-4-6 | 240 |
| 0010 1111 | 47 | 2F | / | -0-4- | 240 |
| 0011 0000 | 48 | 30 | 0 | -0-4-8 | 240 |
| 0011 0001 | 49 | 31 | 1 | -0-4-9 | 240 |
| 0011 0010 | 50 | 32 | 2 | -0-5-0 | 240 |
| 0011 0011 | 51 | 33 | 3 | -0-5-1 | 240 |
| 0011 0100 | 52 | 34 | 4 | -0-5-2 | 240 |

**IA5-Code - DTMF - Umsetzungstabelle**

| BIN | DEZ | HEX | Chr$ [IAS] | Chr$ [GSM] | Lösung DTMF | |
|---|---|---|---|---|---|---|
| xxxx xxxxB | xxxD | xxH | | | Code | ms |
| 0000 0000 | 0 | 00 | NUL | @ | 0D | 80 |
| 0000 0001 | 1 | 01 | SOH | £ | 01 | 80 |
| 0000 0010 | 2 | 02 | STX | $ | 02 | 80 |
| 0000 0011 | 3 | 03 | ETX | ¥ | 03 | 80 |
| 0000 0100 | 4 | 04 | EOT | è | 04 | 80 |
| 0000 0101 | 5 | 05 | ENQ | e | 05 | 80 |
| 00000110 | 6 | 06 | ACK | ù | 06 | 80 |
| 0000 0111 | 7 | 07 | BEL | ì | 07 | 80 |
| 0000 1000 | 8 | 08 | BS | ò | 08 | 80 |
| 0000 1001 | 9 | 09 | HAT | ç | 09 | 80 |
| 0000 1010 | 10 | 0A | LF | LF | 10 | 80 |
| 0000 1011 | 11 | 0B | VT | Ø | 1D | 80 |
| 0000 1100 | 12 | 0C | FF | ø | 12 | 80 |
| 00001101 | 13 | 0D | CR | CR | 13 | 80 |
| 0000 1110 | 14 | 0E | SO | Å | 14 | 80 |
| 0000 1111 | 15 | 0F | SI | ȧ | 15 | 80 |
| 0001 0000 | 16 | 10 | DUL | Δ | 16 | 80 |
| 0001 0001 | 17 | 11 | DC1 | _ | 17 | 80 |
| 00010010 | 18 | 12 | DC2 | Φ | 18 | 80 |
| 0001 0011 | 19 | 13 | DC3 | Γ | 19 | 80 |
| 0001 0100 | 20 | 14 | DC4 | Λ | 20 | 80 |
| 0001 0101 | 21 | 15 | NAK | Ω | 21 | 80 |
| 0001 0110 | 22 | 16 | SYN | Π | 2D | 80 |
| 0001 0111 | 23 | 17 | ETB | Ψ | 23 | 80 |
| 0001 1000 | 24 | 18 | CAN | Σ | 24 | 80 |
| 0001 1001 | 25 | 19 | EM | Θ | 25 | 80 |
| 00011010 | 26 | 1A | SUB | Ξ | 26 | 80 |
| 0001 1011 | 27 | 1B | ESC | 1) | 27 | 80 |
| 0001 1100 | 28 | 1C | FS | Æ | 28 | 80 |
| 0001 1101 | 29 | 1D | GS | æ | 29 | 80 |
| 0001 1110 | 30 | 1E | RS | ß | 30 | 80 |
| 0001 1111 | 31 | 1F | US | E | 31 | 80 |
| 00100000 | 32 | 20 | SPACE | SPACE | 32 | 80 |
| 00100001 | 33 | 21 | ! | ! | 3D | 80 |
| 00100010 | 34 | 22 | " | " | 34 | 80 |
| 0010 0011 | 35 | 23 | # | # | 35 | 80 |
| 00100100 | 36 | 24 | $ | ¤ | 36 | 80 |
| 00100101 | 37 | 25 | % | % | 37 | 80 |
| 0010 0110 | 38 | 26 | & | & | 38 | 80 |
| 0010 0111 | 39 | 27 | ' | ' | 39 | 80 |
| 0010 1000 | 40 | 28 | ( | ( | 40 | 80 |
| 0010 1001 | 41 | 29 | ) | ) | 41 | 80 |
| 0010 1010 | 42 | 2A | * | * | 42 | 80 |
| 0010 1011 | 43 | 28 | + | + | 43 | 80 |
| 00101100 | 44 | 2C | , | , | 4D | 80 |
| 00101101 | 45 | 2D | - | - | 45 | 80 |

## Patentansprüche

1. Verfahren zum Übertragen einer SMS-Nachricht, von einer an einen Standard-Telefonanschluss angeschalteten Ursprungs-Endeinrichtung (20) zu wenigstens einer Ziel-Endeinrichtung (60), mit folgenden Verfahrensschritten:
a) Eingeben und Codieren mehrerer die zu übertragende SMS-Nachricht darstellender Zeichen gemäß einem Datenaufzeichnungsformat;
b) Umsetzen jedes codierten Zeichens in ein entsprechendes Signal, welches durch ein vorbestimmtes Signalisierungsverfahren für einen Standard-Telefonanschluss erzeugt wird;
c) Übermitteln der den eingegebenen Zeichen entsprechenden Signale;
d) Umsetzen der Signale in ein Format, welches von der Ziel-Endeinrichtung verarbeitet werden kann; und
e) Wiedergabe der SMS-Nachricht an der Ziel-Endeinrichtung.

2. Verfahren nach Anspruch 1
**dadurch gekennzeichnet, dass**
die in Schritt 1. a) codierten Zeichen ASCII- oder IA5-codierte Zeichen sind, und dass in Schritt 1. b) jedes ASCII- oder IA5-codierte Zeichen in ein DTMF-Signal umgesetzt wird.

3. Verfahren nach Anspruch 2,
**dadurch gekennzeichnet, dass**
jedes DTMF-Signal mehrere DTMF-Zeichen umfasst, dass die jeweils mehrere DTMF-Zeichen umfassenden DTMF-Signale vor dem Übermitteln gemäß einer vorbestimmbaren Komprimierungsvorschrift derart codiert werden, dass die Anzahl der die zu übertragende SMS-Nachricht darstellenden DTMF-Zeichen reduziert wird, und dass neben den komprimierten DTMF-Signalen eine die ausgewählte Komprimierungsvorschrift entsprechende Kennung übermittelt werden kann.

4. Verfahren nach einem der Ansprüche 1 bis 3,
**dadurch gekennzeichnet, dass**
ferner eine, eine Nachrichtenübertragung anzeigende Dienstekennung und/oder die Adresse der Ursprungs- und/oder Ziel-Endeinrichtung übermittelt wird.

5. Verfahren nach einem der Ansprüche 1 bis 4,
**dadurch gekennzeichnet, dass**
die zu übertragende SMS-Nachricht, die Dienstekennung, die die Komprimierungsvorschrift anzeigende Kennung, eine Quittungsanforderung und/oder die Adresse der Ursprungs- und/oder Ziel-Endeinrichtung in der Ursprungs-Endeinrichtung zwischengespeichert werden.

6. Verfahren nach einem der Ansprüche 1 bis 5,
**dadurch gekennzeichnet, dass**
die Signalumsetzung nach Schritt 1.d) in einer der Ursprungs-Endeinrichtung (20) zugeordneten Vermittlungseinrichtung (30) oder in einem zentralen Server (40) erfolgt.

7. Verfahren nach Anspruch 6,
**dadurch gekennzeichnet, dass**
vor der Übermittlung der SMS-Nachricht automatisch eine Verbindung zur Vermittlungseinrichtung (30) oder zum Server (40) aufgebaut werden kann, und dass nach dem Übermitteln aller Daten die aufgebaute Verbindung zur Ursprungs-Endeinrichtung (20) automatisch ausgelöst werden kann.

8. Endeinrichtung, mit Mitteln zur Durchführung eines Verfahrens nach einem der Ansprüche 1 bis 7.

9. Zentrale Einrichtung, mit Mitteln zur Durchführung eines Verfahrens nach einem der Ansprüche 1 bis 7 , wobei eine Einrichtung (44) zum Umsetzen der Signale ausgebildet ist, die Signale gemäß einem GSM-Protokoll umzusetzen, falls die Endeinrichtung ein Mobilfunkempfänger ist, und die Signale in Datensignale umzusetzen, falls die Endeinrichtung ein Endgerät (60) ist.

10. Zentrale Einrichtung nach Anspruch 9, **dadurch gekennzeichnet, dass**
das Signalisierungsverfahren ein DTMF-Verfahren ist.

## Claims

1. Method for transmitting an SMS message from an originating terminal device (20) connected to a standard telephone line to at least one destination terminal device (60), having the following steps:
a) entry and coding, according to a data recording format, of multiple characters representing the SMS message to be transmitted;
b) conversion of each coded character into a corresponding signal that is generated by a predefined signaling method for a standard telephone line;
c) transmission of the signals corresponding to the entered characters;
d) conversion of the signals into a format that can be processed by the destination terminal device; and
e) reproduction of the SMS message at the destination terminal device.

2. Method according to claim 1,
**characterized in that**,
the characters coded in step 1. a) are ASCII-coded or IAS-coded characters, and **in that**, in step 1. b), each ASCII-coded or IAS-coded character is converted into a DTMF signal.

3. Method according to claim 2,
**characterized in that**
each DTMF signal comprises multiple DTMF characters, **in that** the DTMF signals each comprising multiple DTMF characters are encoded prior to transmission in accordance with a predefinable compression specification such that the number of DTMF characters representing the SMS message to be transmitted is reduced, and **in that** an identifier corresponding to the selected compression specification can be transmitted in addition to the compressed DTMF signals.

4. Method according to any one of claims 1 through 3
**characterized in that**
a service identifier indicating message transmission, and/or the address of the originating and/or destination terminal device, is additionally transmitted.

5. Method according to any one of claims 1 through 4,
**characterized in that**
the SMS message to be transmitted, the service identifier, the identifier indicating the compression specification, an acknowledgement request, and/or the address of the originating and/or destination terminal device are temporarily stored in the originating terminal device.

6. Method according to any one of claims 1 through 5,
**characterized in that**
the signal conversion according to step 1.d) takes place in a switching device (30) associated with the originating terminal device (20) or in a central server (40).

7. Method according to claim 6,
**characterized in that**,
prior to the transmission of the SMS message, a connection to the switching device (30) or to the server (40) can be established automatically, and **in that** after transmission of all data, the connection to the originating terminal device (20) that has been established can be released automatically.

8. Terminal device with means for carrying out a method according to any one of claims 1 through 7.

9. Central device with means for carrying out a method according to any one of claims 1 through 7, wherein a device (44) for converting the signals is designed to convert the signals in accordance with a GSM protocol in the event that the terminal device is a mobile radio receiver, and to convert the signals into data signals in the event that the terminal device is a terminal (60).

10. Central device in accordance with claim 9, **characterized in that** the signaling method is a DTMF method.

## Revendications

1. Procédé de transmission d'un message SMS depuis un équipement de terminaison source (20) raccordé à une ligne téléphonique standard vers au moins un équipement de terminaison destinataire (60), comprenant les étapes de procédé suivantes:
a) saisie et codage de plusieurs caractères représentant le message SMS à transmettre selon un format d'enregistrement de données ;
b) conversion de chaque caractère codé en un signal correspondant généré par un procédé de signalisation prédéterminé pour une ligne téléphonique standard ;
c) transmission des signaux correspondant aux caractères saisis ;
d) conversion des signaux en un format pouvant être traité par l'équipement de terminaison destinataire ; et
e) restitution du message SMS au niveau de l'équipement de terminaison destinataire.

2. Procédé selon la revendication 1,
**caractérisé en ce que**
les caractères codés à l'étape 1.a) sont des caractères codés ASCII ou IA5, et **en ce qu'**à l'étape 1.b) chaque caractère codé ASCII ou IA5 est converti en un signal DTMF.

3. Procédé selon la revendication 2,
**caractérisé en ce que**
chaque signal DTMF comprend plusieurs caractères DTMF, **en ce que**, avant d'être transmis selon une règle de compression pré-déterminable, les signaux comprenant chacun plusieurs caractères DTMF sont codés de manière à réduire le nombre des caractères DTMF représentant le message SMS à transmettre, et **en ce que**, outre les signaux DTMF compressés, un identifiant correspondant à la règle de compression choisie peut être transmis.

4. Procédé selon l'une des revendications 1 à 3,
**caractérisé en ce que**
en plus, un identifiant de service indiquant une transmission de message et/ou l'adresse de l'équipement de terminaison source et/ou destinataire est transmis.

5. Procédé selon l'une des revendications 1 à 4,
**caractérisé en ce que**
le message SMS à transmettre, l'identifiant de service, l'identifiant indiquant la règle de compression, une demande d'accusé de réception et/ou l'adresse de l'équipement de terminaison source et/ou destinataire sont stockés temporairement dans l'équipement de terminaison source.

6. Procédé selon l'une des revendications 1 à 5,
**caractérisé en ce que**
la conversion des signaux selon l'étape 1.d) s'effectue dans un commutateur (30) associé à l'équipement de terminaison source (20) ou dans un serveur central (40).

7. Procédé selon la revendication 6,
**caractérisé en ce que**
avant la transmission du message SMS, une connexion avec le commutateur (30) ou le serveur (40) peut être établie automatiquement, et **en ce que**, après la transmission de l'ensemble des données, la connexion établie avec l'équipement de terminaison source (20) peut être déclenchée automatiquement.

8. Terminal comprenant des moyens pour la réalisation d'un procédé selon l'une des revendications 1 à 7.

9. Dispositif central comprenant des moyens pour la réalisation d'un procédé selon l'une des revendications 1 à 7, dans lequel un dispositif (44) de conversion des signaux est conçu pour convertir les signaux selon un protocole GSM, si l'équipement de terminaison est un récepteur de radiocommunication mobile, et pour convertir les signaux en signaux de données si l'équipement de terminaison est un terminal (60).

10. Dispositif central selon la revendication 9,
**caractérisé en ce que**
le procédé de signalisation est un procédé DTMF.
